# EUROPÄISCHE PATENTANMELDUNG

(11) **EP 4 322 380 A1**
(43) Veröffentlichungstag der Anmeldung: **14.02.2024**
(21) Anmeldenummer: 23186582.5
(22) Anmeldetag: 20.07.2023
(51) Int. Cl.: H02K 7/116, H02K 21/16, B62M 11/14, B62M 6/55, B62M 6/65

(54) **MODULARES ANTRIEBSSYSTEM**

(30) Priorität: 09.08.2022 DE 102022002880
(71) Anmelder: Entwicklungsgesellschaft für Getriebesysteme mbH, 44795 Bochum (DE)
(72) Erfinder: Zyska, Kevin, 45525 Hattingen (DE); Frizler, Richard, 58452 Witten (DE); Tenberge, Peter, 44797 Bochum (DE)
(74) Vertreter: Osterhoff, Utz

(57) **Zusammenfassung**

Modulares Antriebssystem (1), insbesondere für teilelektrisch angetriebene Kleinfahrzeuge, umfassend eine Pedaleinheit (2) und eine Radnabeneinheit (12), wobei ein erster Elektromotor (4) in der Pedaleinheit (2) angeordnet ist, und ein zweiter Elektromotor (14) in der Radnabeneinheit (12) angeordnet ist, wobei der erste Elektromotor (4) einen ersten Rotor (31) mit einem ersten Rotorblechpaket (31a) und einer ersten Magnetbelegung (31b) und einen ersten Stator (35) mit einem ersten Statorblechpaket (35a), einer ersten Wicklung (35b) und einem ersten Kabelstrang (35c) aufweist und der zweite Elektromotor (14) einen zweiten Rotor (36) mit einem zweiten Rotorblechpaket (36a) und einer zweiten Magnetbelegung (36b) und einen zweiten Stator (40) mit einem zweiten Statorblechpaket (40a), einer zweiten Wicklung (40b) und einem zweiten Kabelstrang (40c) aufweist.

Erfindungswesentlich ist, dass der erste Rotor (31) mindestens in einem der Teile erstes Rotorblechpaket (31a) und erste Magnetbelegung (31b) baugleich mit den entsprechenden Teilen zweites Rotorblechpaket (36a) und zweite Magnetbelegung (36b) des zweiten Rotors (36) ausgebildet ist und/oder dass mindestens das erste Statorblechpaket (35a) des ersten Stators (35) baugleich mit dem zweiten Statorblechpaket (40a) des zweiten Stators (40) ausgebildet ist.

## Beschreibung

Die Erfindung betrifft ein modulares Antriebssystem mit den Merkmalen im Oberbegriff von Anspruch 1.

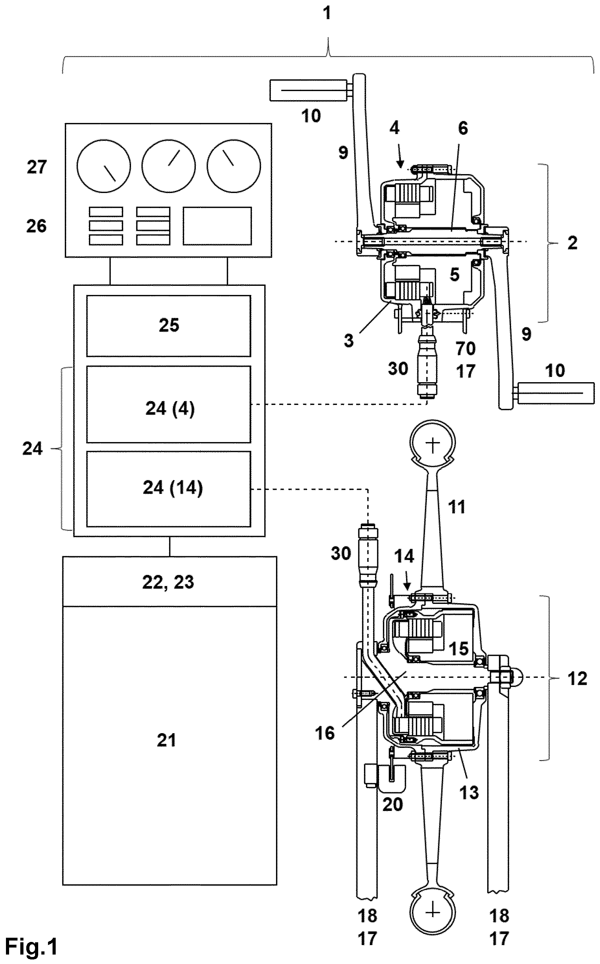

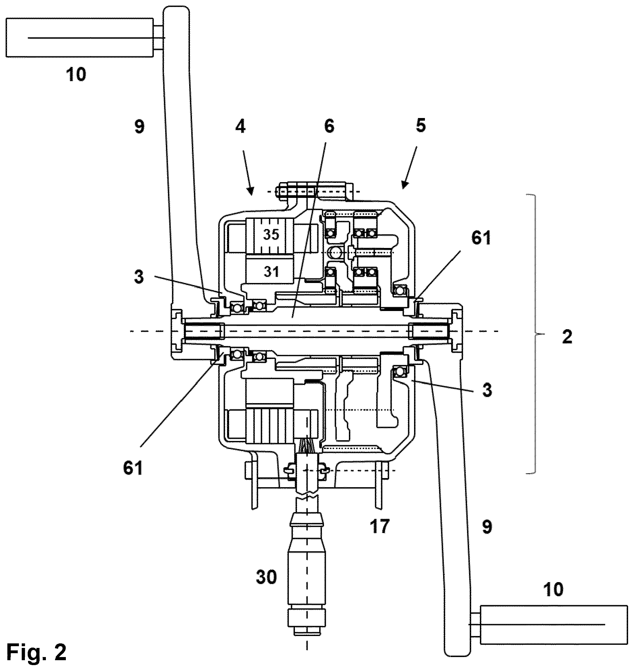

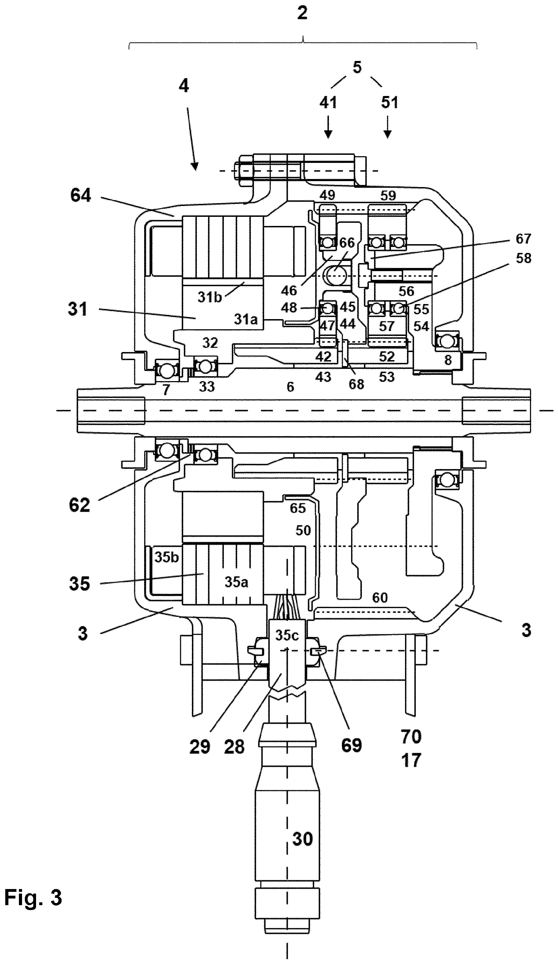

Modulare Antriebssysteme nach dem Oberbegriff sind aus dem Stand der Technik bekannt. In der US 3,884,317 zeigt Fig. 1 ein 2-Rad-Fahrzeug mit einem ersten Elektromotor in einer Pedaleinheit, der dort als Generator wirkt, und mit einem zweiten Elektromotor in einer Radnabeneinheit, der hier das Vorderrad antreibt. Das in diesem Stand der Technik beschriebene Antriebssystem ist ein serieller Hybridantrieb, bei dem die an den Pedalen eingebrachte Leistung zuerst im ersten Elektromotor als Generator in der Pedaleinheit mechanisch-elektrisch gewandelt wird und dann in der Radnabeneinheit mit dem zweiten Elektromotor wieder elektrisch-mechanisch gewandelt wird. Die sonst z.B. in parallelhybriden Fahrrädern mit elektrischer Unterstützung übliche mechanische Drehmoment- und Drehzahlwandlung wird hier nur in dem elektrischen Teilsystem realisiert, das mindestens zwei Umrichter beinhaltet. Eine Batterie ist hier noch über einen Gleichstromzwischenkreis angebunden. Aus der Batterie heraus kann eine elektrische Unterstützungsleistung zu der mechanischen Pedalleistung addiert werden. Außerdem kann der zweite Elektromotor auch als Generator wirken und mit einem Teil der Bremsleistung die Batterie wieder laden, was die Gesamteffizienz eines so betriebenen Fahrzeugs erheblich steigert. Aus diesem Stand der Technik ist in Fig. 2 auch eine Ausführungsvariante mit zwei Pedaleinheiten erkennbar und in Fig. 3 eine Ausführungsvariante mit zwei Motoreinheiten an den beiden Rädern, die hier aber nicht als Radnabeneinheiten ausgeführt sind. In der weiteren Ausgestaltung dieser Erfindung ist erkennbar, dass die von den Pedalen bewegte Tretkurbelwelle ohne weitere Getriebestufen mit dem ersten Elektromotor verbunden ist und dass in der Radnabeneinheit der zweite Elektromotor ohne weitere Getriebestufen das Rad antreibt. Die ersten und zweiten Elektromotoren sind hier erkennbar groß und auch unterschiedlich groß.

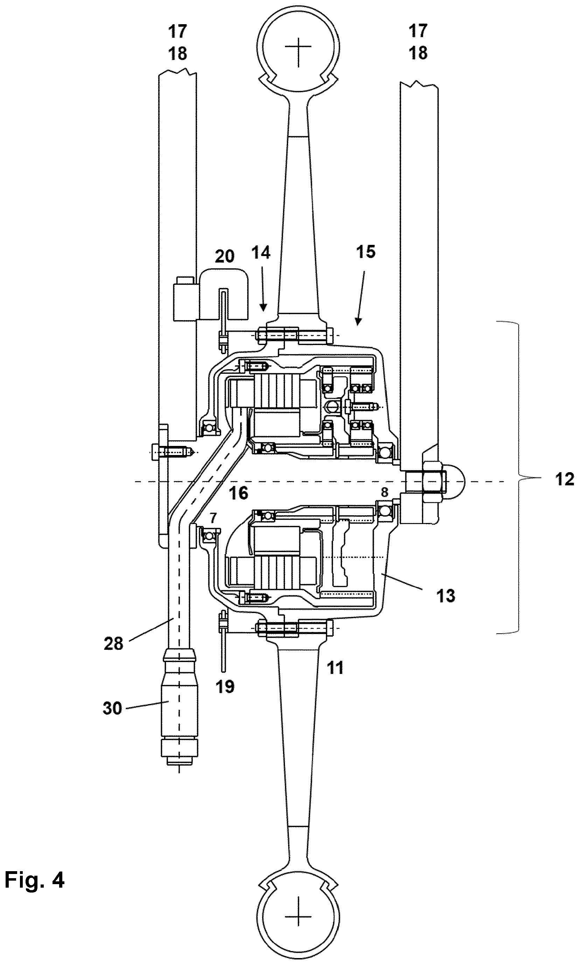

Aus der DE 196 00 698 A1 geht ebenfalls ein im Oberbegriff beschriebenes modulares Antriebssystem hervor. In der Pedaleinheit nach deren Fig. 3 ist ein erster Rotor eines ersten Elektromotors koaxial direkt mit der Tretkurbelwelle verbunden. In der Radnabeneinheit nach Fig. 4 treibt der zweite Elektromotor mit Außenläufer über einen koaxial damit verbundenen einfachen Planetenradsatz als Nabengetriebe die Nabe.

Auch in den weit verbreiteten Parallelhybrid-Antrieben für Fahrräder sind die Elektromotoren, die dort in den Pedaleinheiten oder den Radnabeneinheiten sitzen und nur die Unterstützungsleistung in das System eintreiben, meist unterschiedlich. Ein Motor in einer Pedaleinheit ist z.B. in der CN 211519777 U gezeigt. Er liegt meist parallel zur Tretkurbelwelle, weil nahe an dieser Tretkurbelwelle üblicherweise ein Freilauf und eine Messvorrichtung für das Tretkurbeldrehmoment liegen.

Ein Motor in einer Radnabeneinheit des gleichen Anmelders ist in der CN 206841656 U gezeigt. Hier kommt es darauf an, in einer möglichst kurzen axialen Baulänge mit einem kleinen Elektromotor und einem koaxial daran angeschlossenen Nabengetriebe ein für die Unterstützung des mechanischen Hauptantriebs ausreichend großes Drehmoment zu erzeugen.

Aus der DE 10 2021 102 992 A1 geht ebenfalls ein Vorschlag für eine Pedaleinheit eines modularen Antriebssystems nach dem Oberbegriff hervor. Diese kompakte Pedaleinheit beinhaltet eine Tretkurbelwelle, die in koaxialer Anordnung über ein Pedalgetriebe mit hoher Übersetzung einen kleinen ersten Elektromotor als Generator antreibt. Das Pedalgetriebe beinhaltet hier ein im Grundsatz bekanntes Zykloidengetriebe mit Planetenradstufe, acht Doppelexzenterwellen und zwei verzahnten Taumelscheiben, die über Zylinderbolzen in eine Hohlradverzahnung eingreifen. Solche Getriebestufen sind aus hochpräzisen Stellantrieben bekannt und erfordern dafür geeignete Fertigungsverfahren. Für den Einsatz in relativ einfachen Kleinfahrzeugen sind sie zu teuer.

Pedalgetriebene Kleinfahrzeuge brauchen preiswerte Pedal- und Radnabeneinheiten. Deshalb sind dafür Pedaleinheiten und Radnabeneinheiten mit relativ kleinen Elektromotoren und kleinen, einfachen und leichten Getriebesystemen gefragt.

Aus der DE 10 2017 213 303 A1 gehen im Prinzip sehr einfache Antriebseinheiten mit Kombinationen aus Elektromotor und Getriebe für Anwendungen in muskelbetriebenen Fahrzeugen hervor. Fig. 1 zeigt in einer Strichskizze ein Getriebe bestehend aus einer einfachen dreiwelligen Planetenradstufe mit einem Sonnenrad, einem Planetenträger mit mehreren Planetenrädern und einem Hohlrad, das mit dem Gehäuse der Antriebseinheit verbunden ist, wobei das Getriebe in einem Rotor des Elektromotors steckt. In Fig. 2 ist das Getriebe um eine weitere dreiwellige Getriebestufe mit gleichem Aufbau ergänzt. Der Planetenträger der ersten Getriebestufe ist mit dem Sonnenrad der zweiten Getriebestufe verbunden, so dass sich eine wesentlich größere Gesamtübersetzung ergibt. Solche zweistufigen Getriebe mit einfachen dreiwelligen Planetenradstufen sind seit langem bekannt. Die Getriebestruktur nach der o.a. Fig. 2 geht z.B. aus der ISBN 3-540-63227-1: H.W. Müller "Die Umlaufgetriebe", 2. Auflage, S. 79, Bild 3.6 hervor. Diese Struktur ist im Stand der Technik weit verbreitet, weil insbesondere bei betragsmäßig kleinen Standübersetzungen der Umlaufwirkungsgrad so einer Getriebestruktur wegen geringer verlustbehafteter Gleitwälzleistungsflüsse hoch ist.

Aus Prinzipskizzen für Antriebssysteme, wie denen aus der DE 10 2017 213 303 A1, kann man aber nicht auf alle Funktionen, Drehmoment- und Leistungsdichten, Festigkeiten, Herstellbarkeit, Montierbarkeit und Kosten der Systeme schließen.

Mögliche Ausgestaltungen der Fig. 1 aus der DE 10 2017 213 303 A1 gehen aus der DE 10 2019 114 120 A1 hervor. In den Figuren 1 und 2 dieser Schrift ist eine konstruktive Ausgestaltung für eine Anwendung als Radnabeneinheit gezeigt, bei der das Gehäuse am Rahmen des Fahrzeugs sitzt und eine Abtriebswelle zum Antrieb einer Radnabe zentral durch diese Antriebseinheit hindurchgeht. Diese Antriebseinheit baut in axialer Richtung kurz, aber in radialer Richtung groß und wegen der hohen Dichte der weit außenliegenden Statorbleche auch schwer. Die Anordnung des Getriebes mit dem hohen Abtriebsdrehmoment auf einem kleinen Durchmesser im Rotor des Elektromotors mit dem kleinen Antriebsdrehmoment wirkt zu kompliziert. Denn der Leistungsfluss geht vom außenliegenden Elektromotor zuerst nach innen zum Sonnenrad, dann wieder nach außen zum Planetenträger, von dort wieder nach innen zur innenliegenden Abtriebswelle und dann wieder nach außen über die Radnabe zum Rad.

Auf Basis der Würdigung dieses Standes der Technik liegt dieser Erfindung die Aufgabe zugrunde, ein modulares Antriebssystem aufzuzeigen, welches besonders kostengünstig herstellbar ist.

Die Lösung dieser Aufgabe besteht in einem modularen Antriebssystem gemäß Anspruch 1. Vorteilhafte Ausgestaltungen und Weiterbildungen des erfindungsgemäßen modularen Antriebssystems sind Gegenstand der abhängigen Ansprüche.

Das modulare Antriebssystem, welches insbesondere für teilelektrisch angetriebene Kleinfahrzeuge vorgesehen ist, umfasst mindestens eine Pedaleinheit, die bevorzugt in einem Rahmen des Kleinfahrzeugs integriert ist und von mindestens einer Person mit Muskelkraft antreibbar ist, und mindestens eine Radnabeneinheit, die insbesondere in einem angetriebenen Rad des Kleinfahrzeugs angeordnet ist. In der Pedaleinheit ist ein Elektromotor angeordnet. Dieser weist einen in diesen Anwendungen meist permanent erregten Rotor mit einem Rotorblechpaket und einer Magnetbelegung und einen Stator mit einem Statorblechpaket, einer Wicklung und einen Kabelstrang für die Verbindung mit weiteren elektrischen Bauteilen auf. Im Folgenden wird der Elektromotor der Pedaleinheit als erster Elektromotor bezeichnet und der Rotor und Stator des ersten Elektromotors als erster Rotor und erster Stator. In der Radnabeneinheit ist ebenfalls ein Elektromotor angeordnet, der einen ebenfalls permanent erregten Rotor mit einem Rotorblechpaket und einer Magnetbelegung und einen Stator mit einem Statorblechpaket, einer Wicklung und einen Kabelstrang für die Verbindung mit weiteren elektrischen Bauteilen aufweist. Im Folgenden wird der Elektromotor der Radnabeneinheit als zweiter Elektromotor und der Rotor und Stator des zweiten Elektromotors als zweiter Rotor und zweiter Stator bezeichnet.

Das modulare Antriebssystem zeichnet sich erfindungsgemäß nunmehr dadurch aus, dass das Statorblechpaket des ersten Stators baugleich mit dem Statorblechpaket des zweiten Stators ausgebildet ist. Alternativ oder ergänzend ist der erste Rotor bzgl. des ersten Rotorblechpaktes und der ersten Magnetbelegung baugleich mit dem zweiten Rotor bzgl. dessen zweiten Rotorblechpaktes und der zweiten Magnetbelegung ausgebildet. Die Bezeichnung "baugleich" kann im Rahmen der Erfindung auch als "identisch" ausgelegt werden. In modularen Antriebssystemen für Kleinfahrzeuge sind die Elektromotoren entscheidende Bauteile und haben einen nennenswerten Anteil an den Produktionskosten. Rotor und Stator sind die wesentlichen Komponenten eines Elektromotors. Durch die Verwendung von baugleichen bzw. identischen Rotor- und Statorkomponenten in beiden Elektromotoren können für beide Elektromotoren entsprechende Komponenten aus demselben Fertigungsprozess verwendet werden. Eine Vereinheitlichung wesentlicher Teile der Rotoren bzw. Statoren führt somit zu einer erheblichen Kostensenkung und steigert damit die Wettbewerbsfähigkeit des gesamten Antriebssystems.

Statoren von Elektromotoren haben im Achsschnitt auf beiden Seiten Wickelköpfe. Diese unterscheiden sich, weil auf einer Seite die Kabelbündel zum Anschluss der Phasen und zum Anschluss integrierter Sensoren abgehen. Je nachdem, wo die Kabel aus einer Antriebseinheit herausgehen sollen, wird der Stator in der dafür geeigneten axialen Ausrichtung in die Anschlusskonstruktion eingebaut. Die Rotorwellen von Pedaleinheit und Radnabeneinheit können sich deshalb in einigen geometrischen Details unterscheiden, wenn z.B. die Statoren bzgl. der Positionen der Kabelabgänge in Pedaleinheit und Radnabeneinheit unterschiedlich sind und damit dann auch die axialen Positionen der Rotoren. Der Kostenvorteil baugleicher Statorenkomponenten und Rotorenkomponenten ist aber unabhängig von der eventuell unterschiedlichen Einbaulage dieser Bauteile.

Bevorzugt weist die Pedaleinheit ein Gehäuse auf, wobei eine Tretkurbelwelle in dem Gehäuse gelagert ist, die über ein Pedalgetriebe mit dem ersten Elektromotor verbindbar ist. Weiterhin bevorzugt ist der in der Radnabeneinheit angeordnete zweite Elektromotor über ein Nabengetriebe mit einer auf einer Achse gelagerten Radnabe verbindbar. In der Pedaleinheit treibt die Tretkurbelwelle über das Pedalgetriebe den ersten Elektromotor an, der hauptsächlich als Generator betrieben wird. In der Radnabeneinheit wird die Radnabe vom zweiten Elektromotor über das Nabengetriebe motorisch angetrieben.

In einer vorteilhaften Ausführungsvariante ist der erste Elektromotor der Pedaleinheit koaxial zur Tretkurbelwelle angeordnet und das Pedalgetriebe ist axial neben dem ersten Elektromotor angeordnet und beinhaltet zwei einfache dreiwellige Planetenradstufen, jede mit einem Sonnenrad, einem Hohlrad und einem Planetenträger mit mehreren darauf gelagerten Planetenrädern, wobei das erste Sonnenrad der ersten dreiwelligen Planetenradstufe mit der ersten Rotorwelle des ersten Elektromotors verbunden ist, die auch den ersten Rotor trägt, und wobei der erste Planetenträger der ersten dreiwelligen Planetenradstufe mit dem zweiten Sonnenrad der zweiten dreiwelligen Planetenradstufe verbindbar ist und wobei der zweite Planetenträger der zweiten dreiwelligen Planetenradstufe mit der Tretkurbelwelle verbindbar ist und wobei sowohl das erste Hohlrad der ersten dreiwelligen Planetenradstufe als auch das zweite Hohlrad der zweiten dreiwelligen Planetenradstufe mit dem Gehäuse der Pedaleinheit verbindbar ist, das auch den ersten Stator des ersten Elektromotors trägt. Bei einer Standübersetzung von z.B. -3,0 ergibt sich bei festgehaltenem Hohlrad eine Umlaufübersetzung von +4 zwischen dem Sonnenrad und dem Planetenträger. Gemäß der vorteilhaften Ausführungsvariante mit zwei hintereinander geschalteten Planetenradstufen ergibt sich dann eine Gesamtübersetzung von +16 zwischen dem Rotor des ersten Elektromotors und der Tretkurbelwelle. In pedalgetriebenen Fahrzeugen liegen die meisten Tretkurbeldrehzahlen deutlich unter 100/min. Mit einer Übersetzung 1:16 zum Generator dreht dann der erste Elektromotor mit deutlich weniger als 1600/min. Die meisten am Markt verfügbaren Elektromotoren für pedalgetriebene Kleinfahrzeuge laufen bei diesen Drehzahlen sehr leise. Wenn dieser erste Elektromotor als Pedalgenerator ein max. Drehmoment von ca. 10 Nm kurzzeitig abstützen kann, ist eine damit ausgerüstete Pedaleinheit für Drehmomentbelastungen an der Tretkurbelwelle von kurzzeitig ca. 160 Nm geeignet. Ein Mensch mit z.B. 90 kg Masse bewirkt beim einbeinigen Stand auf dem Pedal einer Standard-Tretkurbel mit 170 mm Länge ein Tretkurbeldrehmoment von 150 Nm. Die meisten derzeit am Markt vertretenen Pedalgeneratoren haben deutlich weniger Drehmomentkapazitäten, die dann aber auch zu schlecht bewerteten Pedalgefühlen führen, weil die Pedale dann bei Extrembelastung mangels Abstützung gefühlt "durchrutschen".

Bevorzugt weisen im Pedalgetriebe das erste Hohlrad und das zweite Hohlrad ein identisches Verzahnungsprofil auf und sind in einem gemeinsamen Hohlrad zusammengefasst, dessen Teilkreisdurchmesser mit einer Toleranz von +/- 25% betragsmäßig so groß ist wie der Außendurchmesser des ersten Stators des ersten Elektromotors. Einfache Planetenradstufen mit z.B. fünf Planetenrädern für höchste Tragfähigkeiten können negative Standübersetzungen bis zu einem Betrag von ca. 3,3 haben. Bei diesen Standübersetzungen ergeben sich auch dann kleine Durchmesser an den Hohlrädern, wenn eine am Markt übliche Tretkurbelwelle noch durch die Sonnenräder hindurchgeht.

Vorzugsweise sind die ersten Planetenräder aus Kunststoff ausgebildet. Besonders bevorzugt sind auch die zweiten Planetenräder aus Kunststoff hergestellt. Bei 10 Nm maximalem Drehmoment vom ersten Elektromotor und fünf Planeten in der ersten Planetenradstufe hat dort jeder Zahneingriff des Sonnenrades nur 2 Nm zu übertragen. Geht man z.B. von einem Außendurchmesser des Stators des ersten Elektromotors von ca. 100 mm aus und der Ausgestaltung nach Anspruch 3 und Hohlraddurchmessern ähnlich dem Außendurchmesser des Stators, dann hat bei der oben genannten Standübersetzung das Sonnenrad einen Wirkdurchmesser von ca. 34 mm. Bei 2 Nm pro Zahneingriff und 5 mm gemeinsamer Verzahnungsbreite ergibt das eine Linienlast von nur 23 N/mm pro Zahneingriff. Kunststoffzahnräder können das mit den heute verfügbaren Kunststoffen sicher übertragen. Die Kunststoffverzahnung im Eingriff mit einer Metallverzahnung in der ersten und damit schnellen Getriebestufe bewirkt eine deutliche Geräuschreduzierung gegenüber Zahneingriffen mit der Materialpaarung Metall gegen Metall. Die zweite dreiwellige Planetenradstufe dreht zwar um ca. den Faktor 4 langsamer als die erste dreiwellige Planetenradstufe und weist dann in gleichem Maße höhere Drehmomentbelastungen auf. Bei hohen Anforderungen an das Geräuschverhalten ist dann aber die ca. im gleichen Faktor größere Breite der Planetenräder aus Kunststoff in dieser Getriebestufe gerechtfertigt. Würde man die zweite dreiwellige Planentenradstufe aus gehärteten und geschliffenen Zahnrädern ausstatten, so könnte man etwas Bauraum sparen, aber zu Lasten des Betriebsgeräusches.

In einer weiteren vorteilhaften Ausführungsvariante weisen im Pedalgetriebe das erste Sonnenrad und das zweite Sonnenrad identische Profile der Sonnenradverzahnungen auf. Sie lassen sich dann z.B. aus einem durch Drehbearbeitung und Wälzfräsen hergestellten viel längeren Verzahnungsteil durch Trennen und Nachbearbeiten kostengünstig herstellen.

Das Nabengetriebe in der Radnabeneinheit ist bevorzugt koaxial zu dem zweiten Elektromotor und axial neben diesem angeordnet. Das Nabengetriebe beinhaltet auch zwei einfache dreiwellige Planetenradstufen, jede mit einem Sonnenrad, einem Hohlrad und einem Planetenträger mit mehreren darauf gelagerten Planetenrädern, wobei das erste Sonnenrad der ersten dreiwelligen Planetenradstufe mit der zweiten Rotorwelle des zweiten Elektromotors verbunden ist, die auch den zweiten Rotor trägt, und wobei der erste Planetenträger der ersten dreiwelligen Planetenradstufe mit dem zweiten Sonnenrad der zweiten dreiwelligen Planetenradstufe verbindbar ist und wobei der zweite Planetenträger der zweiten Planetenradstufe mit der auf der innenliegenden Achse gelagerten Radnabe verbindbar ist und wobei sowohl das erste Hohlrad der ersten dreiwelligen Planetenradstufe als auch das zweite Hohlrad der zweiten dreiwelligen Planetenradstufe mit einem Bauteilträger der Radnabeneinheit verbindbar ist, der auch den zweiten Stator des zweiten Elektromotors trägt, und wobei der Bauteilträger mit der Achse der Radnabeneinheit verbindbar ist. Das Nabengetriebe soll also im Wesentlichen genauso aufgebaut sein wie das Pedalgetriebe. Der zweite Planetenträger ist hier aber mit der Radnabe verbunden, die auf der innenliegenden Achse gelagert ist, die auf kurzem Weg mit dem Rahmen verbindbar ist. Das führt im Gegensatz zum beschriebenen Stand der Technik zu einer sehr kompakten Radnabeneinheit.

In der Pedaleinheit und in der Radnabeneinheit hat der Elektromotor die kleinste Drehmomentbelastung und der zweite Planetenträger der zweiten Planetenradstufe hat die größte Drehmomentbelastung. In der Pedaleinheit ist dieser zweite Planetenträger nach innen mit der innen liegenden Tretkurbelwelle verbunden. In der Radnabeneinheit ist der zweite Planetenträger mit der Radnabe verbunden, die auf einem großen Durchmesser das Rad trägt. Eine Nebeneinander-Anordnung der Elektromotoren und der Getriebesysteme führt insgesamt zu kompakteren und leichteren Konstruktionen mit im Wesentlichen baugleichen Elektromotoren als eine Anordnung der Getriebestufen innerhalb des Rotors, wie das aus dem Stand der Technik bekannt ist.

Vorzugsweise sind im Pedalgetriebe und im Nabengetriebe die jeweils ersten Planetenräder und die ersten Planetenträger baugleich. Bevorzugt sind auch im Pedalgetriebe und im Nabengetriebe die jeweils zweiten Planetenräder und die zweiten Sonnenräder baugleich.

In einer besonders vorteilhaften Ausführungsvariante sind die Hohlradverzahnungen im Pedalgetriebe und im Nabengetriebe im Stirnschnitt gleich ausgebildet. Weiterhin bevorzugt ist der zweite Stator durch die Hohlradverzahnung im Bauteilträger montierbar, wenn der Kopfkreisdurchmesser der Hohlradverzahnung betragsmäßig etwas größer ist als der Außendurchmesser des zweiten Stators. Das ist dann von Vorteil, wenn der Bauteilträger Teil der Achse in der Radnabeneinheit ist.

Die Erfindung ist nicht nur auf die Merkmale ihrer Ansprüche beschränkt. Denkbar und vorgesehen sind auch Kombinationsmöglichkeiten einzelner Anspruchsmerkmale und Kombinationsmöglichkeiten einzelner Anspruchsmerkmale mit dem in den Vorteilsangaben und zu den Ausgestaltungsbeispielen Offenbarten.

Die Erfindung bezieht sich insbesondere auch auf nach dem Stand der Technik gleichwirkende Lösungen. So sind zum Beispiel Kugellager für eine gekoppelte Abstützung von Radial- und Axialkräften auch durch eine Kombination eines reinen Radiallagers und eines Axiallagers ersetzbar. Wälzlager sind durch Gleitlager ersetzbar und umgekehrt. Stegwangen mit integrierten Planetenradzapfen sind gleichwertig auch durch Stegwangen mit eingepressten Planetenradbolzen darstellbar. Für die Verbindungen von Wellen gibt es neben Zylinderpressverbindungen und Zahnwellenverbindungen viele technisch gleichwertige Alternativen.

In 6 Figuren sind Ausführungsbeispiele für die Module des erfindungsgemäßen modularen Antriebssystems in zweidimensionalen Achsschnitten im Detail dargestellt.

Im Einzelnen zeigen dabei:
- Fig. 1: den grundsätzlichen strukturellen Aufbau des modularen Antriebssystems mit mindestens einer Pedaleinheit, mindestens einer Radnabeneinheit und den weiteren Modulen wie mindestens einer Batterie sowie den Komponenten zur Steuerung, Regelung und Bedienung des Systems,
- Fig. 2: einen Achsschnitt durch eine Pedaleinheit mit Tretkurbeln und Pedalen sowie angedeuteten Schnittstellenblechen zur Anbindung der Pedaleinheit an den Fahrzeugrahmen,
- Fig. 3: einen Achsschnitt durch die Pedaleinheit nach Fig. 2 ohne Tretkurbeln und Pedale zur besseren Darstellung der inneren Bauteile dieses Moduls,
- Fig. 4: einen Achsschnitt durch eine Radnabeneinheit mit angeschraubtem Rad, Bremsscheibe und Bremssattel in einer zweiseitigen Gabelaufhängung,
- Fig. 5: einen Achsschnitt durch die Radnabeneinheit nach Fig. 4 ohne Rad, Bremssattel und Rahmenteile zur besseren Darstellung der inneren Bauteile dieses Moduls,
- Fig. 6: einen Achsschnitt durch eine Radnabeneinheit mit angeschraubtem Rad, Bremsscheibe und Bremssattel für eine einseitige Rahmenaufhängung.

Fig. 1 verdeutlicht den grundsätzlichen strukturellen Aufbau des modularen Antriebssystems 1 für ein teilelektrisch angetriebenes Kleinfahrzeug. Das Antriebssystem 1 weist mindestens eine von einer Person mit Muskelkraft über eine Tretkurbelwelle 6 angetriebene Pedaleinheit 2 auf, die im Rahmen 17 des Fahrzeugs verbaut ist, und mindestens eine in einem angetriebenen Rad 11 des Kleinfahrzeugs angeordnete Radnabeneinheit 12. Aufsummiert über einen typischen Fahrzyklus verbraucht ein Fahrzeug mit so einem Antriebssystem 1 an den angetriebenen Rädern 11 meist mehr Energie als durch die Pedaleinheiten 2 in das Antriebssystem 1 eingespeist werden. Deshalb benötigt so ein Antriebssystem 1 mindestens eine Batterie 21, die auch im Stillstand des Fahrzeugs durch Anbindung an ein äußeres elektrisches Netz geladen werden kann. Ein Batteriecontroller 22 überwacht den Lade- und den Lastzustand der Batterie.

Die Pedaleinheiten 2 weisen erste Elektromotoren 4 auf und die Radnabeneinheiten 12 weisen zweite Elektromotoren 14 auf. Die ersten Elektromotoren 4 und die zweiten Elektromotoren 14 stehen über ein Umrichtersystem 24 mit je einem Umrichter für jeden Elektromotor und einen Gleichstromzwischenkreis 23 untereinander und mit der Batterie 21 in Verbindung. Ein Steuergerät 25 steuert den Energiehaushalt der Batterie 21 und die Leistungen der Elektromotoren 4 und 14 abhängig von den Eingabedaten von den Fahrern über ein Bedienfeld 26 und von den in der Steuerungssoftware implementierten Algorithmen. Die Kommunikation mit den Fahrern erfolgt zudem über ein Anzeigemodul 27. Das Bedienmodul 26 und das Anzeigemodul 27 können auch zu einem gemeinsamen Modul zusammengefasst sein.

Die Leistungsübertragung zwischen den Pedaleinheiten 2, den Radnabeneinheiten 12 und der Batterie 21 erfolgt in diesem modularen Antriebssystem 1 elektrisch ohne einen rein mechanischen Leistungspfad. Damit sind mindestens folgende Vorteile verbunden. Jeder Fahrer des Kleinfahrzeugs kann über seine Pedaleinheit 2 eine individuell von ihm bzw. für ihn vorgegebene Nenn-Leistung bei einer individuell definierten Nenn-Drehzahl der jeweiligen Tretkurbelwelle 6 als Funktion der Fahrgeschwindigkeit einspeisen.

In den Pedaleinheiten 2 sind die ersten Elektromotoren 4 über Pedalgetriebe 5 mit konstanter Übersetzung mit den Tretkurbelwellen 6 verbunden. Die ersten Sensoren 34 für die Rotorlagen der ersten Elektromotoren 4 ermöglichen somit auch eine sehr genaue Bestimmung der Drehzahlen der Tretkurbelwellen 6. In Verbindung mit einem einfach zu realisierenden Triggersignal für eine bestimmten Drehwinkelposition einer Tretkurbel 9 kann die Steuerung auch die Rotationslage der rechten bzw. linken Tretkurbel unterscheiden.

Der Regelalgorithmus für die Drehzahl an der Tretkurbelwelle 6 jeder Pedaleinheit 2 definiert das Soll-Verhältnis von Tretkurbeldrehzahl zur Raddrehzahl beginnend von einem max. Wert bei Stillstand des Fahrzeugs und kleinen Geschwindigkeiten und dann mit der Geschwindigkeit abnehmend, bis der Verlauf der Nenn-Drehzahl über der Geschwindigkeit erreicht ist. Die ungleichförmig wirkenden Pedalkräfte und die davon erzeugten Antriebsdrehmomente an der Tretkurbelwelle würden ohne ein passendes Lastdrehmoment des Generators zu stark ungleichförmigen Beschleunigungen der Tretkurbelwelle führen. Ein einfach nach dem Stand der Technik aufgebauter PID-Regler regelt das Lastdrehmoment des als Generator wirkenden ersten Elektromotors 4 so, dass die Soll-Tretkurbeldrehzahl schnell und gut erreicht wird. So ein Regler lässt sich so abstimmen, dass das damit geregelte Drehmoment einen dynamischen Verlauf über dem Tretkurbelwinkel einnimmt, der sehr ähnlich dem dynamischen Drehmomentverlauf in einem herkömmlichen konventionell angetriebenen Fahrrad ist. Das Fahrgefühl wird dadurch von den Fahrern als sehr natürlich beschrieben.

Das effektive bzw. mittlere Fahrerdrehmoment ergibt sich aus einer Glättung des dynamischen Drehmomentverlaufs. Mit dem o.a. Triggersignal ist sogar eine Unterscheidung zwischen dem Drehmoment an der rechten Tretkurbel und an der linken Tretkurbel möglich.

Jede dieser elektrischen Pedalleistungen jedes ersten Elektromotors 4 fließt über einen ersten Umrichter im Umrichtersystem 24 in den Gleichstromzwischenkreis 23 und von dort in die Batterie 21 und/oder über zweite Umrichter im Umrichtersystem 24 zu den zweiten Elektromotoren 14 in den Radnabeneinheiten 12, um den Leistungsbedarf für die aktuelle Fahrsituation zu decken.

Wie bei einem herkömmlichen Fahrrad decken die Fahrer, solange sie unterhalb ihrer wie oben beschrieben definierten Leistungsgrenze pedalieren, allein den Leistungsbedarf des Fahrzeugs. Bei diesen Leistungsgrenzen könnte man, wie ebenfalls oben schon beschrieben, zwischen Leistungsgrenzen für einzelne Fahrer und für deren rechtes und deren linkes Bein unterscheiden. In einem Fahrrad mit elektrischer Unterstützung erhöht der Fahrer die Unterstützungsleistung aus der Batterie, wenn seine momentane Leistung bei Erreichen seiner Leistungsgrenze für den gewünschten Fahrzustand nicht mehr ausreicht. So einen Vorgang kann man in dem erfindungsgemäßen modularen Antriebssystem 1 leicht automatisieren.

Wenn die Fahrer das Fahrzeug beschleunigen wollen oder wenn Sie eine größere Steigung befahren wollen, erhöhen sie ihre Pedalier-Leistung. Bei Erreichen der individuellen oberen Leistungsgrenze erhöht die Steuerung die Batterieleistung kontinuierlich, so dass das Fahrzeug mehr Raddrehmoment erhält. Dadurch beschleunigt das Fahrzeug oder kann größere Steigungen befahren. Wird das Fahrzeug dabei zu schnell, so verringern die Fahrer an den Pedaleinheiten ihren Leistungseinsatz. Fällt dieser unter eine untere Leistungsgrenze, so reduziert die Steuerung die Batterieleistung kontinuierlich, bis die Fahrer wieder ohne Unterstützung aus der Batterie das Fahrzeug antreiben. Eine ausreichende Differenz zwischen der oberen und der unteren Leistungsgrenze vermeidet ein permanentes Erhöhen und Absenken der Batterieleistung beim Fahren im Bereich der Leistungsgrenze.

Ein Antriebssystem dieser Art mit so einer Steuerung ermöglicht ein stufenloses Verhältnis zwischen den Drehzahlen an den Tretkurbelwellen 6 der Pedaleinheiten 2 und den Abtriebsdrehzahlen an den Radnaben 13 der Radnabeneinheiten 12. Es ermöglicht außerdem ein automatisches und stufenloses Anpassen der Unterstützungsleistung aus der Batterie 21. Ein Mindestleistungseinsatz jedes Fahrers ist dabei einfach zu definieren und zu überwachen, so dass Fahrzeuge mit so einem Antriebssystem auch den derzeitigen Regularien genügen.

Kleinfahrzeuge mit so einem modularen Antriebssystem 1 sind wegen der o.a. Regelungs- und Steuerungsmöglichkeiten insbesondere für schwächere Fahrer oder Fahrer mit krankheits- oder altersbedingten körperlichen Einschränkungen geeignet. Solche Personen können auf sogenannten Therapie-Fahrzeugen sogar gezielt trainiert werden. Abhängig von biometrischen Daten können dann die individuell vorgegebenen Leistungsgrenzen und Tretkurbeldrehzahlen im Rahmen eines Trainingsplans oder Therapieplans variiert werden. Die zu trainierenden oder zu therapierenden Personen können auch ganz von Antriebsaufgaben entbunden werden, wenn mindestens eine weitere Person das Fahrzeug mindestens teilweise antreibt.

Fig. 2 zeigt eine Ausführungsvariante der erfindungsgemäßen Pedaleinheit 2 mit einer zentral liegenden Tretkurbelwelle 6, an deren beiden Enden Tretkurbeln 9 form- und kraftschlüssig angebracht sind. An den Tretkurbeln 9 sind in bekannter Weise Pedale 10 angeschraubt. An den Tretkurbeln 9 stützen sich über Federscheiben axial vorgespannte Labyrinthkörper 61 ab, die mit dem Gehäuse 3 der Pedaleinheiten ein Labyrinth zur Verstärkung der Dichtwirkung gegen eintretenden Schmutz und Feuchtigkeit bilden.

Fig. 3 zeigt die Pedaleinheit 2 nach Fig. 2 in einer vergrößerten Darstellung ohne Tretkurbeln 9 und ohne Pedale 10. Die Tretkurbelwelle 6 ist an beiden Enden über ein erstes Hauptlager 7 und ein zweites Hauptlager 8 in einem zweiteiligen Gehäuse 3 der Pedaleinheit 2 gelagert. Diese beiden Lager 7 und 8 sind vorzugsweise für eine Lebensdauerschmierung abgedichtet.

In der in Fig. 3 linken Hälfte des Gehäuses 3 der Pedaleinheit 2 ist der erste Stator 35 des ersten Elektromotors 4 über seinen Außendurchmesser und einen axialen Anschlag 64 positioniert. Dieser Stator 35 ist so ausgerichtet, dass der Wickelkopf mit den vielen zu einem ersten Kabelstrang 35c zusammengefassten abgehenden Phasen- und Sensorkabeln relativ mittig in der Pedaleinheit 2 liegt, damit dieses Kabelbündel 28 möglichst mittig aus dem Gehäuse 3 der Pedaleinheit 2 herausgeführt werden kann. Das Kabelbündel 28 verläuft durch eine Gummimuffe 29 zur Abdichtung und mündet in einem Stecker 30 zur elektrischen und elektronischen Anbindung der Pedaleinheit 2 über den Kabelbaum des modularen Antriebssystems 1 an dessen andere Module.

Der erste Rotor 31 des ersten Elektromotors 4 sitzt auf der ersten Rotorwelle 32, die in der in Fig. 3 linken Hälfte des Gehäuses 3 über ein erstes Rotorlager 33 auf der Tretkurbelwelle 6 gelagert ist und die auch mit dem ersten Sonnenrad 42 der ersten dreiwelligen Planetenradstufe 41 des Pedalgetriebes 5 verbindbar ist. Die erste Rotorwelle 32 kann einteilig oder mehrteilig ausgestaltet sein, je nach den Fertigungseinrichtungen der Hersteller. Das erste Sonnenrad 42 kämmt mit mehreren, hier fünf, ersten Planetenrädern 47, die gleichmäßig am Umfang verteilt in einem ersten Planetenträger 44 sitzen. Dieser erste Planetenträger 44 weist nur eine erste Stegwange 45 mit ersten Planetenradzapfen 46 auf, auf denen die ersten Planetenräder 47 über Kugellager als erste Planetenradlager 48 gelagert sind. Die ersten Planetenräder 47 sind aus Kunststoff gefertigt, so dass die Zahneingriffe zwischen dem ersten Sonnenrad 42 aus Metall und den ersten Planetenrädern 47 aus Kunststoff möglichst leise erfolgen. Die ersten Planetenräder 47 greifen in ein erstes Hohlrad 49 ein, dass ein Teil der in Fig. 3 rechten Hälfte des Gehäuses 3 der Pedaleinheit 2 ist. Das erste Sonnenrad 42 ist über ein erstes Sonnenradlager 43 gegenüber der Tretkurbelwelle 6 gelagert.

Die ersten Planetenradzapfen 46 sind hier aufgebohrt und nehmen von einer Seite korrespondierende hohle Zapfen an einem Kunststoffdeckel 50 auf, die in die aufgebohrten ersten Planetenradzapfen 46 gepresst und eventuell geklebt sind. Zusätzlich können in die hohlen Zapfen des Kunststoffdeckels 50 von der Stegseite noch Klemmkugeln 66 eingepresst werden, wenn das für einen sicheren Halt nötig ist. Dadurch entsteht ein sicherer Form- und Kraftschluss zwischen dem Kunststoffdeckel 50 und der ersten Stegwange 45, der ausreicht, mögliche axiale Kräfte aus der Planetenradlagerung aufzunehmen.

Der Kunststoffdeckel 50 dient auch als elektrische Isolation zwischen den metallischen Bauteilen des Pedalgetriebes 5 und den sehr nah daneben angeordneten Statorwicklungen.

Der Kunststoffdeckel 50 weist am inneren Rand auch noch eine axiale Verlängerung 65 mit geringem Spiel zur Rotorwelle auf. Der Kunststoffdeckel 50 soll damit den stark mit Fett geschmierten Bauraum für das Pedalgetriebe 5 gegenüber dem wenig Fett enthaltenden Raum des ersten Elektromotors 4 berührungslos abdichten.

Zur Minimierung der Fettmenge im Pedalgetriebe 5 sind alle Kugellager schon werksseitig geschmiert und gedichtet. Die darüber hinaus in die Pedaleinheit 2 eingebrachte Fettmenge dient dann nur noch zur Schmierung der Gleitlager und der Zahneingriffe.

Die erste Stegwange 45 des ersten Planetenträgers 44 ist mit dem zweiten Sonnenrad 52 der zweiten dreiwelligen Planetenradstufe 51 des Pedalgetriebes 5 verbunden. Dieses zweite Sonnenrad 52 hat das gleiche Verzahnungsprofil wie das erste Sonnenrad 42, so dass die beiden Sonnenräder auch aus einem gemeinsam verzahnten Bauteil durch Trennen und weitere Bearbeitungen erzeugt werden könnten. Die Verbindung zwischen der ersten Stegwange 45 und dem zweiten Sonnenrad 52 erfolgt über eine Pressverbindung mit zylindrischer Nabenbohrung in der ersten Stegwange 45 auf einem verzahnten Wellenabsatz des zweiten Sonnenrades 52, der bei Belastung einen Mikroformschluss bewirkt. Dieser verzahnte Wellenabsatz ergibt sich durch geringfügiges radiales Kürzen der Laufverzahnung des zweiten Sonnenrades 52, wodurch gleichzeitig ein axialer Anschlag entsteht. Diese Verbindung baut in axialer Richtung sehr kurz.

Die zweiten Sonnenräder 52 sind mittels zweiter Sonnenradlager 53 auf der Tretkurbelwelle 6 gelagert und kämmen mit mehreren, hier ebenfalls fünf, zweiten Planetenrädern 57, die gleichmäßig am Umfang verteilt in einem zweiten Planetenträger 54 sitzen. Dieser zweite Planetenträger 54 weist ebenfalls nur eine zweite Stegwange 55 mit längeren zweiten Planetenradzapfen 56 auf, auf denen die breiteren zweiten Planetenräder 57 ebenfalls über Kugellager als zweite Planetenradlager 58 gelagert sind. Die axiale Fixierung und Vorspannung der zweiten Planetenradlager 58 erfolgt über mit den zweiten Planetenradzapfen verschraubte Passscheiben 67.

Die zweiten Planetenräder 57 sind in dieser Ausführungsvariante ebenfalls aus Kunststoff gefertigt, so dass auch in der zweiten dreiwelligen Planetenradstufe 51 die Zahneingriffe zwischen dem zweiten Sonnenrad 52 aus Metall und den zweiten Planetenrädern 57 aus Kunststoff leise erfolgen. Die zweiten Planetenräder 57 greifen in ein zweites Hohlrad 59 ein, dass ebenfalls ein Teil der in Fig. 3 rechten Hälfte des Gehäuses 3 der Pedaleinheit 2 ist.

Die Hohlradverzahnungen des ersten Hohlrads 49 und des zweiten Hohlrads 59 haben das gleiche Verzahnungsprofil und lassen sich als gemeinsames Hohlrad 60 in einem Herstellungsprozess in einer Aufspannung erzeugen.

Der zweite Planetenträger 54 ist mit der Tretkurbelwelle 6 verbindbar, vorzugsweise mittels einer Zahnwellenverbindung zwischen einem Innenprofil an der zweiten Stegwange 55 und einem Außenprofil an einem Absatz auf der Tretkurbelwelle 6. Der zweite Planetenträger 54 ist zudem an mehreren Stellen zwischen den einzelnen zweiten Planetenrädern 57 versteift, um elastische Verformungen zu minimieren, die sich aus den Biegemomenten aus den Verzahnungskräften und dem Biegehebelarm zwischen den Angriffspunkten der Zahnkräfte an den zweiten Planetenrädern 57 und der Abstützebene der Biegemomente in der zweiten Stegwange 55 ergeben.

Das erste Sonnenrad 42 stützt sich in dieser Ausführungsvariante über ein als Gleitlager ausgeführtes und daher sehr klein bauendes erstes Sonnenradlager 43 gegenüber der Tretkurbelwelle 6 ab. Das zweite Sonnenrad 52 stützt sich vorzugsweise über ein dazu identisches und damit ebenfalls als Gleitlager ausgeführtes zweites Sonnenradlager 53 auf der Tretkurbelwelle 6 ab. Beide Gleitlager sind L-förmig ausgeführt. Sie können also Radialkräfte und Axialkräfte übertragen. Das Axiallager der ersten Sonnenradlagers 43 sitzt zwischen dem ersten Sonnenrad 42 und einer Anlaufscheibe 68, die auch das Abrutschen der ersten Stegwange 45 vom zweiten Sonnenrad 52 verhindert. Das Axiallager des zweiten Sonnenradlagers 53 sitzt zwischen dem zweiten Sonnenrad 52 und einem Absatz auf der Tretkurbelwelle 6, gegen den sich die zweite Stegwange 55 abstützt.

Durch eine axiale Federvorspannung mit federnden Wellenscheiben 62, vorzugsweise zwischen dem ersten Hauptlager 7 und dem ersten Rotorlager 33 wird auch das zweite Hauptlager 8 mit vorgespannt. So eine Vorspannung zwingt die Wälzkörper der Kugellager gegen die Laufflächen und reduziert deren Laufgeräusch.

Zur Montage der Pedaleinheit 2 werden zuerst in die linke Hälfte des Gehäuses 3 der erste Stator 35 und das erste Hauptlager 7 montiert. In die rechte Hälfte des Gehäuses 3 wird die Tretkurbelwelle 6 samt zweitem Hauptlager 8 und aller auf der Welle gelagerten Bauteile eingesetzt. Die ersten Planetenräder 47 und die zweiten Planetenräder 57 greifen dann schon in das erste Hohlrad 49 und in das zweite Hohlrad 59 ein. Vor dem an Werkzeugen geführten Zusammenfügen der vormontierten Gehäusehälften wird das Kabelbündel 28 so aus dem Gehäuse 3 geführt, dass die Gummimuffe 29 in dafür vorgesehenen korrespondierenden Ausnehmungen in den Gehäusehälften passt. Ein geteilter Klemmring 69 mit konischen Klemmflächen wird beim Zusammenschieben der Gehäusehälften so axial bewegt, dass die Gummimuffe 29 gegen weitere konische Klemmflächen in den Ausnehmungen gedrückt wird. Dadurch wird zusätzlich zur Dichtfunktion auch noch eine gewisse Zugentlastung realisiert.

Beide Hälften des Gehäuses 3 weisen in Bereich der Trennfuge einige axial verlaufende Rippen auf, in denen relativ lange Schrauben für gut vorgespannte Schraubenverbindungen sorgen. Die bearbeiteten Endflächen der Rippen dienen darüber hinaus als Schraubflächen und Zentrierungen zur Befestigung der Pedaleinheit 2 an einen Adapterflansch 70 zum Rahmen 17 des Kleinfahrzeugs.

In Fig. 4 ist eine Radnabeneinheit 12 des erfindungsgemäßen modularen Antriebssystems 1 gezeigt, die hier in einer zweiseitigen Gabelaufhängung 18 als Teil des Rahmens 17 des Kleinfahrzeugs gehalten ist. Die Achse 16 der Radnabeneinheit 12 ist an beiden Enden in der Gabelaufhängung 18 fixiert. Auf dieser Achse 16 ist über das erste Hauptlager 7 und das zweite Hauptlager 8 die zweiteilige Radnabe 13 gelagert. Die zwei Teile der Radnabe 13 sind über einen Flansch verschraubt, mit dem auch die Felge des Rades 11 verbindbar ist. Diese lösbare Verbindung ermöglicht eine einfache Demontage des Rades 11, z.B. für einen Wechsel des Reifens. So eine Schnittstelle erlaubt hier die Montage von Gussfelgen oder auch von Speichenfelgen. Außerdem ist eine Bremsscheibe 19 mit der Radnabe 13 verbindbar. Der zugehörige Bremssattel 20 ist in bekannter Weise mit der Gabelaufhängung 18 verbunden.

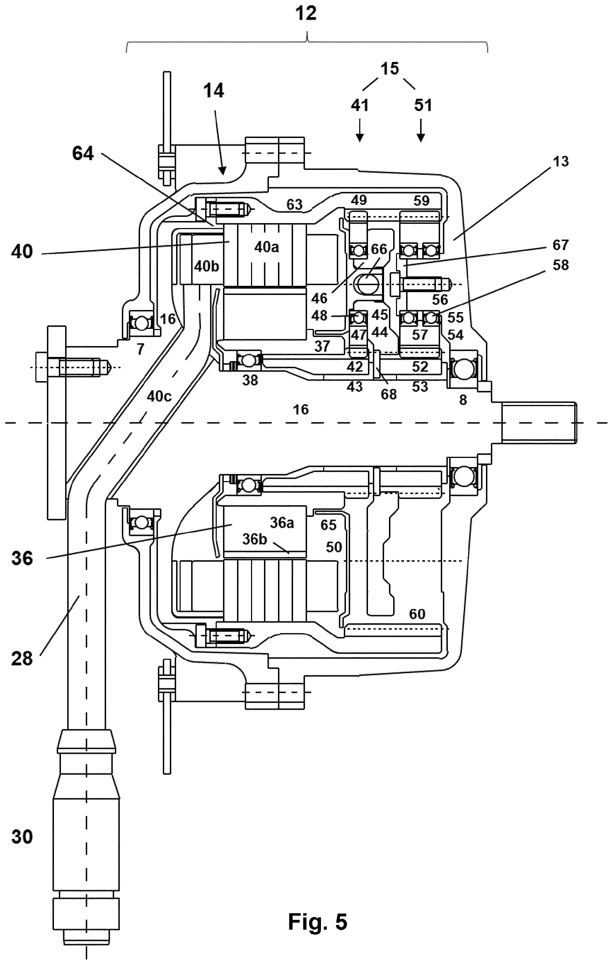

Um den inneren Aufbau der Radnabeneinheit 12 besser erkennen zu können, ist in Fig. 5 die gleiche Radnabeneinheit 12 ohne Rad 11 und ohne Gabelaufhängung 18 vergrößert dargestellt. Die Radnabeneinheit 12 weist einen zweiten Elektromotor 14 auf, dessen zweiter Stator 40 in einem Bauteilträger 63 sitzt, der mit einem radialen Flansch der Achse 16 verbindbar ist. Dieser radiale Flansch kann ein Teil der Achse 16 sein oder stoffschlüssig mit der Achse 16 verbunden sein. Der zweite Rotor 36 des zweiten Elektromotors 14 sitzt auf einer zweiten Rotorwelle 37, die über ein zweites Rotorlager 38 auf der Achse 16 gelagert ist.

Der zweite Stator 40 des zweiten Elektromotors 14 hat ein zweites Statorblechpaket 40a, das baugleich bzw. identisch zu dem ersten Statorblechpaket 35a des ersten Stators 35 des ersten Elektromotors 4 ist. Die zweite Wicklung 40b des zweiten Stators 40 ist technologisch gleich zur ersten Wicklung 35b des ersten Stators 35, unterscheidet sich aber eventuell geringfügig davon. Das zweite Rotorblechpaket 36a und die zweite Magnetbelegung 36b des zweiten Rotors 36 des zweiten Elektromotors 14 sind baugleich bzw. identisch zu dem ersten Rotorblechpaket 31a und der ersten Magnetbelegung 31b des ersten Rotors 31 des ersten Elektromotors 4.

Die zweite Rotorwelle 37 trägt das erste Sonnenrad 42 des Planetengetriebesystems des Nabengetriebes 15. Das Planetengetriebesystem des Nabengetriebes 15 ist weitgehend baugleich bzw. identisch zu dem Planetengetriebesystem des Pedalgetriebes 5. Dies wird auch sofort klar, wenn man die Figuren 3 und 5 nebeneinanderliegend vergleicht.

In beiden Antriebseinheiten beinhaltet das Planetengetriebesystem des Pedalgetriebes 5 und des Nabengetriebes 15 eine erste dreiwellige Planetenradstufe 41 und eine zweite dreiwellige Planetenradstufe 51. Zur ersten dreiwelligen Planetenradstufe 41 gehört das erste Sonnenrad 42, das fest mit der Rotorwelle 32 bzw. 37 verbindbar ist. Das erste Sonnenrad 42 kämmt mit mehreren ersten Planetenrädern 47, die gleichmäßig am Umfang verteilt in einem ersten Planetenträger 44 sitzen. Dieser erste Planetenträger 44 weist wieder nur eine erste Stegwange 45 mit darauf sitzenden ersten Planetenradzapfen 46 auf. Die ersten Planetenräder 47 sind auch im Nabengetriebe 15 aus Kunststoff gefertigt. Die ersten Planetenräder 47 greifen wieder in ein erstes Hohlrad 49 ein, das in der Radnabeneinheit 15 Teil des Bauteilträgers 63 ist. Das erste Sonnenrad 42 ist in der Radnabeneinheit 15 über ein wieder als Gleitlager ausgeführtes erstes Sonnenradlager 43 gegenüber der Achse 16 gelagert.

Das erste Sonnenrad 42, das erste Sonnenradlager 43, die ersten Planetenräder 47, die ersten Planetenradlager 48 und der erste Planetenträger 44 mit der ersten Stegwange 45 und den darauf sitzenden ersten Planetenradzapfen 46 sind in der Pedaleinheit 2 und in der Radnabeneinheit 12 baugleich bzw. identisch. Die Radnabeneinheit 12 weist auch denselben Kunststoffdeckel 50 wie die Pedaleinheit 2 auf.

Die erste Stegwange 45 des ersten Planetenträgers 44 ist wieder mit dem zweiten Sonnenrad 52 der zweiten dreiwelligen Planetenradstufe 51 des Nabengetriebes 15 verbunden. Dieses zweite Sonnenrad 52 hat wieder das gleiche Verzahnungsprofil wie das erste Sonnenrad 42. Die Verbindung zwischen der ersten Stegwange 45 und dem zweiten Sonnenrad 52 erfolgt wieder über eine Pressverbindung mit zylindrischer Nabenbohrung auf einem verzahnten Wellenabsatz, der bei Belastung einen Mikroformschluss bewirkt.

Die zweiten Sonnenräder 52 sind auch im Nabengetriebe 15 mittels, hier ebenfalls als Gleitlager ausgeführter, zweiter Sonnenradlager 53 gegenüber der Achse 16 gelagert und kämmen mit mehreren, hier ebenfalls wieder fünf, zweiten Planetenrädern 57, die gleichmäßig am Umfang verteilt in einem zweiten Planetenträger 54 sitzen. Dieser zweite Planetenträger 54 hat auch wieder nur eine zweite Stegwange 55, die in der Radnabeneinheit 12 ein Teil der Radnabe 13 ist, und trägt hier auch die längeren zweiten Planetenradzapfen 56, auf denen die breiteren zweiten Planetenräder 57 ebenfalls über Kugellager als zweite Planetenradlager 58 gelagert sind. Die axiale Fixierung und Vorspannung der Planetenradlager 58 erfolgt ebenfalls wieder über eine verschraubte Passscheibe 67. Die zweiten Planetenräder 57 kämmen mit einem zweiten Hohlrad 59, das in der Radnabeneinheit 12 ebenfalls Teil des Bauteilträgers 63 ist. Beide Hohlräder sind wieder zu einem gemeinsamen Hohlrad 60 zusammengefasst.

In Fig. 5 sind die Achse 16 mit dem dazugehörigen radialen Flansch und der Bauteilträger 63 miteinander verschraubte Teile. Wenn diese Teile schon vor der Montage des zweiten Stators 40 verschraubt sind, oder wenn sie sogar als ein Teil zusammen erzeugt wurden, dann muss der zweite Stator 40 durch die gemeinsame Hohlradverzahnung 60 hindurch in dieses Bauteil eingesetzt werden. In diesem Fall wäre es dann erforderlich, dass der Kopfkreisdurchmesser der Hohlradverzahnung 60 betragsmäßig größer ist als der Füge-Außendurchmesser des Stators 40. Wenn der Bauteilträger 63 und die Achse 16 erst nach der Montage des Stators 40 zusammengebaut werden, kann der Kopfkreisdurchmesser des Hohlrades 60 auch betragsmäßig kleiner als der Außendurchmesser des Stators 40 sein.

Das zweite Sonnenrad 52, das zweite Sonnenradlager 53, die zweiten Planetenräder 57, die zweiten Planetenradlager 58 und die Passscheibe 67 sind ebenfalls in der Pedaleinheit 2 und in der Radnabeneinheit 12 baugleich bzw. identisch.

Erfindungswesentlich ist nunmehr, dass der erste Stator 35 bzgl. seines Statorblechpakets 35a mit dem zweiten Stator 40 bzgl. dessen Statorblechpakets 40a baugleich ausgebildet ist und der erste Rotor 31 bzgl. dessen Rotorblechpakets 31a und deren Magnetbelegung 31b baugleich mit dem zweiten Rotor 36 bzgl. dessen Rotorblechpaktes 36a und deren Magnetbelegung 36b ausgebildet ist. Dadurch sind auch der erste Elektromotor 4 in der Pedaleinheit 2 und der zweite Elektromotor 14 in der Radnabeneinheit 12 im Wesentlichen baugleich. Sie sind nur unterschiedlich in das Gehäuse 3 der Pedaleinheit 2 bzw. in den mit der Achse 16 verbundenen Bauteilträger 63 der Radnabeneinheit 12 eingebaut. In der Radnabeneinheit 12 wird das Kabelbündel 28 vom zweiten Stator 40 durch eine gerade Bohrung in der Achse 16 zuerst nach innen durch das erste Hauptlager 7 hindurch und dann nach außen geführt. In der Pedaleinheit 2 wird das Kabelbündel 28 vom ersten Stator, der hier schon in dem Gehäuse 3 der Pedaleinheit 2 sitzt, radial nach außen geführt. Die unterschiedlichen Einbaulagen der Rotoren 31 und 36 führen zu etwas unterschiedlichen Rotorwellen 32 und 37 zwischen den Rotoren und den ersten Sonnenrädern 42. Auch das erste Rotorlager 33 und das zweite Rotorlager 38 unterscheiden sich. Und auch die ersten Hauptlager 7 und die zweiten Hauptlager 8 haben in der Pedaleinheit 2 und in der Radnabeneinheit 12 unterschiedliche Abmessungen, aber im Wesentlichen gleiche Aufgaben.

Die vielen baugleichen bzw. identischen Bauteile in Pedaleinheit 2 und Radnabeneinheit 12 führen zu einem signifikanten Kostenvorteil so eines modularen Antriebssystems gegenüber dem Stand der Technik.

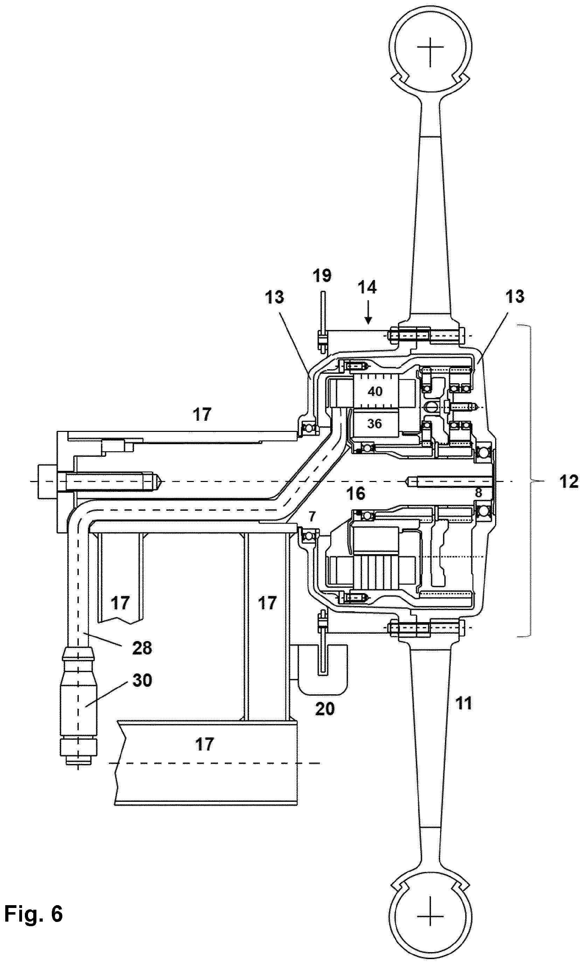

Fig. 6 zeigt noch eine Ausführungsvariante der Radnabeneinheit 12 für eine einseitige Aufhängung im Rahmen 17, die insbesondere für Zweispur-Fahrzeuge vorteilhaft ist. Hier wird deutlich, warum die Achse 16 der Radnabeneinheit 12 auf der Einspannseite viel dicker ist als auf der anderen Seite. Bei der Anwendung in Lastenrädern treten erhebliche dynamische Radlasten auf, wenn das Fahrzeug z.B. über eine Schwelle oder durch ein Schlagloch fährt. Die Achse 16 soll sich auch dann nur geringfügig durchbiegen, um auch dann einen möglichst konstanten Luftspalt zwischen dem zweiten Rotor 36 und dem zweiten Stator 40 zu behalten. Die Achse 16 steckt in einer zylindrischen Bohrung im Rahmen 17 und wir dort kraft- und/oder formschlüssig so fixiert, dass alle Reaktionskräfte und Reaktionsmomente sicher auf den Rahmen übertragen werden. Dafür sind nach dem Stand der Technik viele gleichwertige Lösungen bekannt. Das Kabelbündel 28 wird in der hier dargestellten Ausführungsvariante innerhalb der zylindrischen Bohrung in einer Nut in der Achse geführt. Dadurch lässt sich auch sehr einfach eine gute Abdichtung und eine Zugentlastung des Kabels realisieren.

### Bezugszeichenliste

- 1: Modulares Antriebssystem
- 2: Pedaleinheit
- 3: Gehäuse der Pedaleinheit
- 4: erster Elektromotor
- 5: Pedalgetriebe
- 6: Tretkurbelwelle
- 7: erstes Hauptlager
- 8: zweites Hauptlager
- 9: Tretkurbel
- 10: Pedal
- 11: Rad
- 12: Radnabeneinheit
- 13: Radnabe
- 14: zweiter Elektromotor
- 15: Nabengetriebe
- 16: Achse
- 17: Rahmen
- 18: Gabelaufhängung
- 19: Bremsscheibe
- 20: Bremssattel
- 21: Batterie
- 22: Batteriecontroller
- 23: Gleichstromzwischenkreis
- 24: Umrichtersystem
- 25: Steuergerät
- 26: Bedienfeld
- 27: Anzeigemodul
- 28: Kabelbündel
- 29: Gummimuffe
- 30: Stecker
- 31: erster Rotor
- 31a: erstes Rotorblechpaket
- 31b: erste Magnetbelegung
- 32: erste Rotorwelle
- 33: erstes Rotorlager
- 34: erste Sensoren
- 35: erster Stator
- 35a: erstes Statorblechpaket
- 35b: erste Wicklung
- 35c: erster Kabelstrang
- 36: zweiter Rotor
- 36a: zweites Rotorblechpaket
- 36b: zweite Magnetbelegung
- 37: zweite Rotorwelle
- 38: zweites Rotorlager
- 39: zweite Sensoren
- 40: zweiter Stator
- 40a: zweites Statorblechpaket
- 40b: zweite Wicklung
- 40c: zweiter Kabelstrang
- 41: erste dreiwellige Planetenradstufe
- 42: erstes Sonnenrad
- 43: erstes Sonnenradlager
- 44: erster Planetenträger
- 45: erste Stegwange
- 46: erste Planetenradzapfen
- 47: erste Planetenräder
- 48: erste Planetenradlager
- 49: erstes Hohlrad
- 50: Kunststoffdeckel
- 51: zweite dreiwellige Planetenradstufe
- 52: zweites Sonnenrad
- 53: zweites Sonnenradlager
- 54: zweiter Planetenträger
- 55: zweite Stegwange
- 56: zweite Planetenradzapfen
- 57: zweite Planetenräder
- 58: zweite Planetenradlager
- 59: zweites Hohlrad
- 60: gemeinsames Hohlrad
- 61: Labyrinthkörper
- 62: Wellenscheibe
- 63: Bauteilträger
- 64: axialer Anschlag
- 65: axiale Verlängerung
- 66: Klemmkugeln
- 67: Passscheibe
- 68: Anlaufscheibe
- 69: Klemmring
- 70: Adapterflansch

## Patentansprüche

1. Modulares Antriebssystem (1), insbesondere für teilelektrisch angetriebene Kleinfahrzeuge, umfassend eine Pedaleinheit (2) und eine Radnabeneinheit (12), wobei ein erster Elektromotor (4) in der Pedaleinheit (2) angeordnet ist, und ein zweiter Elektromotor (14) in der Radnabeneinheit (12) angeordnet ist, wobei der erste Elektromotor (4) einen ersten Rotor (31) mit einem ersten Rotorblechpaket (31a) und einer ersten Magnetbelegung (31b) und einen ersten Stator (35) mit einem ersten Statorblechpaket (35a), einer ersten Wicklung (35b) und einem ersten Kabelstrang (35c) aufweist und der zweite Elektromotor (14) einen zweiten Rotor (36) mit einem zweiten Rotorblechpaket (36a) und einer zweiten Magnetbelegung (36b) und einen zweiten Stator (40) mit einem zweiten Statorblechpaket (40a), einer zweiten Wicklung (40b) und einem zweiten Kabelstrang (40c) aufweist,
**dadurch gekennzeichnet, dass** der erste Elektromotor (4) und der zweite Elektromotor (14) permanenterregte Synchronmotoren sind, und dass der erste Rotor (31) mindestens in einem der Teile erstes Rotorblechpaket (31a) und erste Magnetbelegung (31b) baugleich mit den entsprechenden Teilen zweites Rotorblechpaket (36a) und zweite Magnetbelegung (36b) des zweiten Rotors (36) ausgebildet ist und/oder dass mindestens das erste Statorblechpaket (35a) des ersten Stators (35) baugleich mit dem zweiten Statorblechpaket (40a) des zweiten Stators (40) ausgebildet ist.

2. Modulares Antriebssystem (1) nach Anspruch 1,
**dadurch gekennzeichnet, dass** in der Pedaleinheit (2) eine in einem Gehäuse (3) gelagerte Tretkurbelwelle (6) über ein Pedalgetriebe (5) mit dem ersten Elektromotor (4) verbindbar ist, und wobei in der Radnabeneinheit (12) der zweite Elektromotor (14) über ein Nabengetriebe (15) mit einer auf einer Achse (16) gelagerten Radnabe (13) verbindbar ist.

3. Modulares Antriebssystem (1) nach Anspruch 2,
**dadurch gekennzeichnet, dass** in der Pedaleinheit (2) der erste Elektromotor (4) koaxial zur Tretkurbelwelle (6) angeordnet ist und dass das Pedalgetriebe (5) axial neben dem ersten Elektromotor (4) angeordnet ist und zwei einfache dreiwellige Planetenradstufen (41, 51), jede mit einem Sonnenrad (42, 52), einem Hohlrad (49, 59) und einem Planetenträger (44, 54) mit mehreren darauf gelagerten Planetenrädern (47, 57) beinhaltet, wobei das erste Sonnenrad (42) der ersten dreiwelligen Planetenradstufe (41) mit der ersten Rotorwelle (32) des ersten Elektromotors (4) verbunden ist, die auch den ersten Rotor (31) trägt, und wobei der erste Planetenträger (44) der ersten dreiwelligen Planetenradstufe (41) mit dem zweiten Sonnenrad (52) der zweiten dreiwelligen Planetenradstufe (51) verbindbar ist und wobei der zweite Planetenträger (54) der zweiten dreiwelligen Planetenradstufe (51) mit der Tretkurbelwelle (6) verbindbar ist und wobei sowohl das erste Hohlrad (49) der ersten dreiwelligen Planetenradstufe (41) als auch das zweite Hohlrad (59) der zweiten dreiwelligen Planetenradstufe (51) mit einem Gehäuse (3) der Pedaleinheit (2) verbindbar ist, das auch den ersten Stator (35) des ersten Elektromotors (4) trägt.

4. Modulares Antriebssystem (1) nach Anspruch 3,
**dadurch gekennzeichnet, dass** im Pedalgetriebe (5) das erste Hohlrad (49) und das zweite Hohlrad (59) ein identisches Verzahnungsprofil aufweisen und in einem gemeinsamen Hohlrad (60) zusammengefasst sind, dessen Teilkreisdurchmesser mit einer Toleranz von +/-25% betragsmäßig so groß ist wie der Außendurchmesser des ersten Stators (35) des ersten Elektromotors (4).

5. Modulares Antriebssystem (1) nach Anspruch 3 oder 4,
**dadurch gekennzeichnet, dass** die ersten Planetenräder (47) aus Kunststoff bestehen.

6. Modulares Antriebssystem (1) nach einem der Ansprüche 3 bis 5,
**dadurch gekennzeichnet, dass** die zweiten Planetenräder (57) aus Kunststoff bestehen.

7. Modulares Antriebssystem (1) nach einem der Ansprüche 3 bis 6,
**dadurch gekennzeichnet, dass** im Pedalgetriebe (5) das erste Sonnenrad (42) und das zweite Sonnenrad (52) identische Profile der Sonnenradverzahnungen aufweisen.

8. Modulares Antriebssystem (1) nach einem der Ansprüche 3 bis 7,
**dadurch gekennzeichnet, dass** das Nabengetriebe (15) in der Radnabeneinheit (12) koaxial zu dem zweiten Elektromotor (14) und axial neben diesem angeordnet ist und auch zwei einfache dreiwellige Planetenradstufen (41, 51) beinhaltet, jede mit einem Sonnenrad (42, 52), einem Hohlrad (49, 59) und einem Planetenträger (44, 54) mit mehreren darauf gelagerten Planetenrädern (47, 57), wobei das erste Sonnenrad (42) der ersten dreiwelligen Planetenradstufe (41) mit der zweiten Rotorwelle (37) des zweiten Elektromotors (14) verbunden ist, die auch den zweiten Rotor (36) trägt, und wobei der erste Planetenträger (44) der ersten dreiwelligen Planetenradstufe (41) mit dem zweiten Sonnenrad (52) der zweiten dreiwelligen Planetenradstufe (51) verbindbar ist und wobei der zweite Planetenträger (54) der zweiten dreiwelligen Planetenradstufe (51) mit der auf der innenliegenden Achse (16) gelagerten Radnabe (13) verbindbar ist und wobei sowohl das erste Hohlrad (49) der ersten dreiwelligen Planetenradstufe (41) als auch das zweite Hohlrad (59) der zweiten dreiwelligen Planetenradstufe (51) mit einem Bauteilträger (63) der Radnabeneinheit (12) verbindbar ist, der auch den zweiten Stator (40) des zweiten Elektromotors (14) trägt, und wobei der Bauteilträger (63) mit der Achse (16) der Radnabeneinheit (12) verbindbar ist.

9. Modulares Antriebssystem (1) nach einem der Ansprüche 3 bis 8,
**dadurch gekennzeichnet, dass** im Pedalgetriebe (5) und im Nabengetriebe (15) die jeweils ersten Planetenräder (47) und die ersten Planetenträger (44) baugleich sind.

10. Modulares Antriebssystem (1) nach einem der Ansprüche 3 bis 9,
**dadurch gekennzeichnet, dass** im Pedalgetriebe (5) und im Nabengetriebe (15) die jeweils zweiten Planetenräder (57) und die zweiten Sonnenräder (52) baugleich sind.
